# EUROPEAN PATENT SPECIFICATION

(11) **EP 4 148 178 B1**
(45) Date of publication and mention of the grant of the patent: **25.11.2026**
(21) Application number: 22195170.0
(22) Date of filing: 12.09.2022
(51) Int. Cl.: D06F 39/10, A47L 15/42

(54) **FILTERING SYSTEM, IN PARTICULAR FOR A LAUNDRY WASHING MACHINE OR A CLOTHES DRYER**
FILTERSYSTEM, INSBESONDERE FÜR EINE WASCHMASCHINE ODER EINEN WÄSCHETROCKNER
SYSTÈME DE FILTRATION, EN PARTICULIER POUR UNE MACHINE À LAVER LE LINGE OU UN SÈCHE-LINGE

(30) Priority: 13.09.2021 IT 202100023561
(43) Date of publication of application: 15.03.2023
(73) Proprietor: ELBI International S.p.A., 10129 Torino (IT)
(72) Inventor: BECCHIO, Marco, 10041 CARIGNANO (TO) (IT); BELLATO, Gabriele, 10129 Torino (IT); MARANGON, Mauro, 10129 Torino (IT); POMPA, Alessandro, 10098 RIVOLI (TO) (IT); RAVEDATI, Paolo, 10024 Moncalieri (TO) (IT); BENEDETTO, Gianluca, 10129 Torino (IT)
(74) Representative: Vitillo, Giuseppe

(56) References cited:
- WO-A1-2012/114245
- CN-A- 107 447 452
- CN-B- 106 283 537
- CN-U- 204 185 692
- US-A1- 2009 071 912
- US-A1- 2018 148 883

## Description

### Technical field

The present invention relates to a filtering system, in particular for a washing or drying machine, such as a laundry washing machine or a clothes dryer.

### Technical background

Filtering systems for washing or drying machines are known in the art. However, such types of filtering systems suffer from a number of drawbacks that should be remedied.

US2018148883A1 discloses a lint removal system for a laundry appliance which includes a lint washing assembly adapted to deliver wet lint to a disposal area. An impeller is disposed within a continuous processing chamber of a pump casing, the impeller operable to deliver a fluid from the disposal area to a drain outlet. A blade assembly is disposed within the continuous processing chamber, the blade assembly rotationally operable to process the wet lint from the disposal area to define lint particles that are delivered with the fluid to the drain outlet.

CN107447452A discloses a washing machine filter. The filter includes a cleaning barrel, a spiral rod and a water pump, the bottom of the cleaning barrel is provided with a water draining pipe, a water collection box is arranged on the bottom of the water draining pipe and internally provided with the spiral rod one side of which is in transmission connection with a motor through a conveyor belt, venting holes are formed in the spiral rod, and one side of the spiral rod is provided with a blower. The bottom of the cleaning barrel is connected with the water collecting box through the water draining pipe, the water collecting box is internally provided with the spiral rod one side of which is in transmission connection with the motor through the conveyor belt, an impurity collecting chamber is arranged on one side of the spiral rod, and the venting holes are formed inside the spiral rod, so that the spiral rod can convey impurities into the impurity collecting chamber and prevent the impurities from blocking stirring of the spiral rod.

CN 204 185 692 U describes a kind of automated cleaning water purification cleaning device. It comprises washing machine shell and inner core, be arranged with water circulation system from top to bottom outside described inner core, be provided with filter in water circulation system, described water circulation system is arranged in the cavity between shell and inner core.

### Summary of the invention

It is one object of the present invention to provide a filtering system capable of overcoming the drawbacks of the prior art while at the same time being simple and economical to manufacture.

According to the present invention, this and other objects are achieved through a filtering system having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figures **1** and **2** are perspective views from above and, respectively, from below of a filtering system made in accordance with an exemplary embodiment of the present invention.
Figure **3** is an exploded perspective view of the system shown in the preceding Figures.
Figure **4** is a block diagram representing the system shown in the preceding Figures from a functional viewpoint.
Figures **5** to **9** are longitudinal sectional views of the system shown in the preceding Figures, wherein such system is illustrated in different operating conditions.

For completeness' sake, the following is a list of alphanumerical references and names used herein to identify parts, elements and components illustrated in the above-summarized drawings.
- **WM.**: Laundry washing machine
- **X-X.**: Longitudinal axis
- **S1.**: Position sensor
- **S2.**: Clogging sensor
- **S3.**: Filling sensor
- **10.**: Filtering system
- **12.**: Casing
- **14.**: Cavity
- **14a.**: Central chamber
- **14b.**: Upper chamber
- **14c.**: Annular chamber
- **16.**: Inlet
- **18.**: Outlets
- **20.**: Storing container
- **22.**: Hollow portion
- **24.**: Upper closure member
- **26.**: Lower closure member
- **28.**: Upper sealing gasket
- **30.**: Lower sealing gasket
- **32.**: Sealing element
- **34.**: Support pin
- **36.**: Compression spring
- **38.**: Compression spring
- **40.**: Filter
- **100.**: Filtering assembly
- **102.**: Hollow body
- **104.**: Axial through aperture
- **200.**: Compacting assembly
- **202.**: Endless screw
- **204.**: Helicoidal profile
- **300.**: Driving assembly
- **302.**: Electric motor
- **303.**: Reduction gear train
- **304.**: Shaft
- **304a.**: First section
- **304b.**: Second section
- **400.**: Flow diverter assembly
- **402.**: Diaphragms
- **402a.**: First diaphragm
- **402b.**: Second diaphragm
- **402c.**: Third diaphragm
- **500.**: Bypass assembly
- **502.**: Non-return valve

### Detailed description of the invention

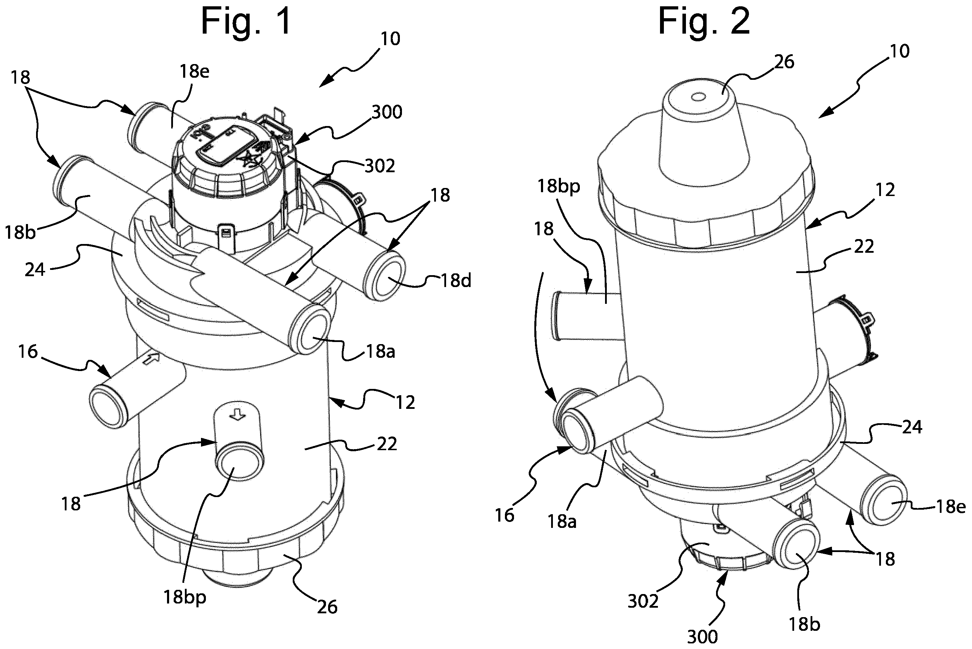

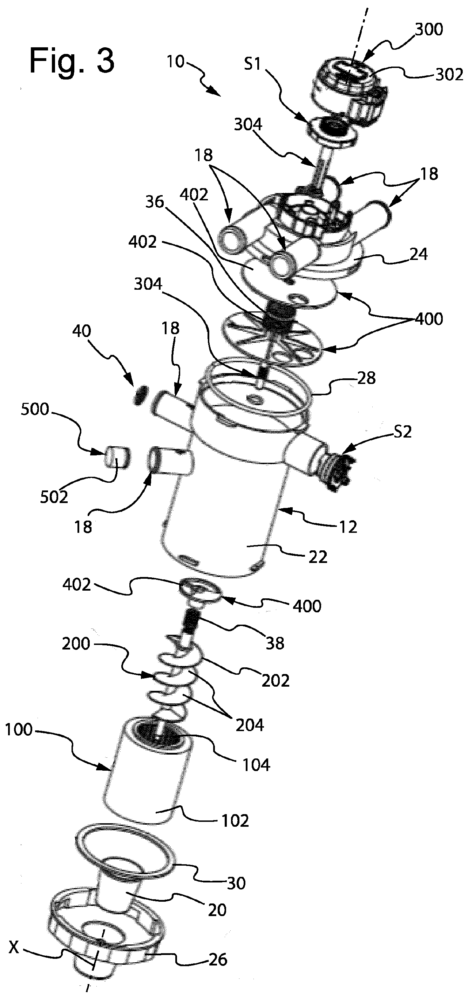

With reference to the annexed drawings, and in particular to Figures **1** to **3****,** numeral **10** designates as a whole a filtering system according to an exemplary embodiment of the present invention. System **10** is applicable, in particular, to a washing or drying machine, such as a laundry washing machine or a clothes dryer. In the embodiment illustrated herein, system **10** will be described with particular reference to a laundry washing machine **WM.**

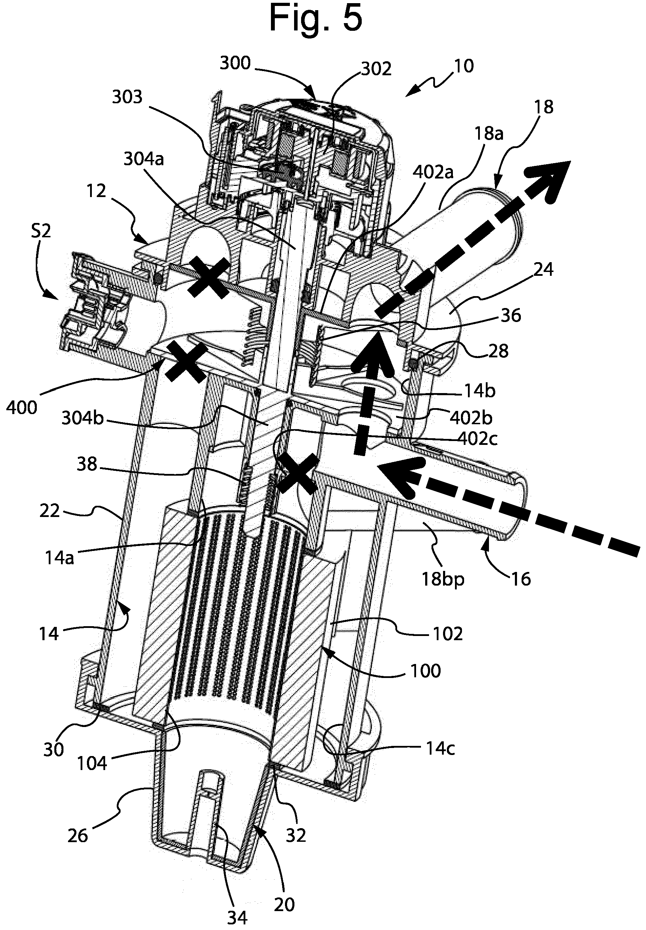

System **10** comprises a casing **12** internally defining a cavity **14** (as indicated in Figures **5** to **9****)** and comprising an inlet **16** configured to receive a fluid. Inlet **16** leads into cavity **14.**

In the illustrated embodiment, casing **12** comprises a plurality of outlets (in particular, as will be described more in detail below, it includes five outlets), designated as a whole as **18** and configured for delivering the fluid coming from cavity **14.** Nevertheless, in further alternative embodiments (not shown) the casing may comprise fewer outlets, even only one.

System **10** further comprises a filtering assembly **100** contained in cavity **14.** Filtering assembly **100** is configured to be crossed by a fluid entering casing **12** through inlet **16,** so as to trap any solid particles, in particular microplastic ones, contained in said fluid.

System **10** comprises also a compacting assembly **200** situated in cavity **14** and configured for collecting and compacting the solid particles trapped by filtering assembly **100.**

In addition, system **10** comprises a driving assembly **300** configured to drive compacting assembly **200.** Preferably, driving assembly **300** comprises a motor, in particular an electric motor **302.** In the illustrated embodiment, electric motor **302** co-operates with a reduction gear train **303** to drive compacting assembly **200.** The action of compacting assembly **200** makes it possible to keep filtering assembly **100** cleaner, thereby extending its service life.

The filtering assembly **100** comprises a hollow body **102** having an axial through aperture **104.** The axial through aperture **104** is crossed by compacting assembly **200.** In the illustrated embodiment, hollow body **102** has a substantially cylindrical shape, internally defining axial through aperture **104.**

As will be described in more detail below, hollow body **102** advantageously comprises a plurality of concentrical filtering layers of different mesh gauges, suitable for trapping microplastic particles of different sizes.

Furthermore, filtering assembly **100** is preferably mounted in casing **12** in a removable manner.

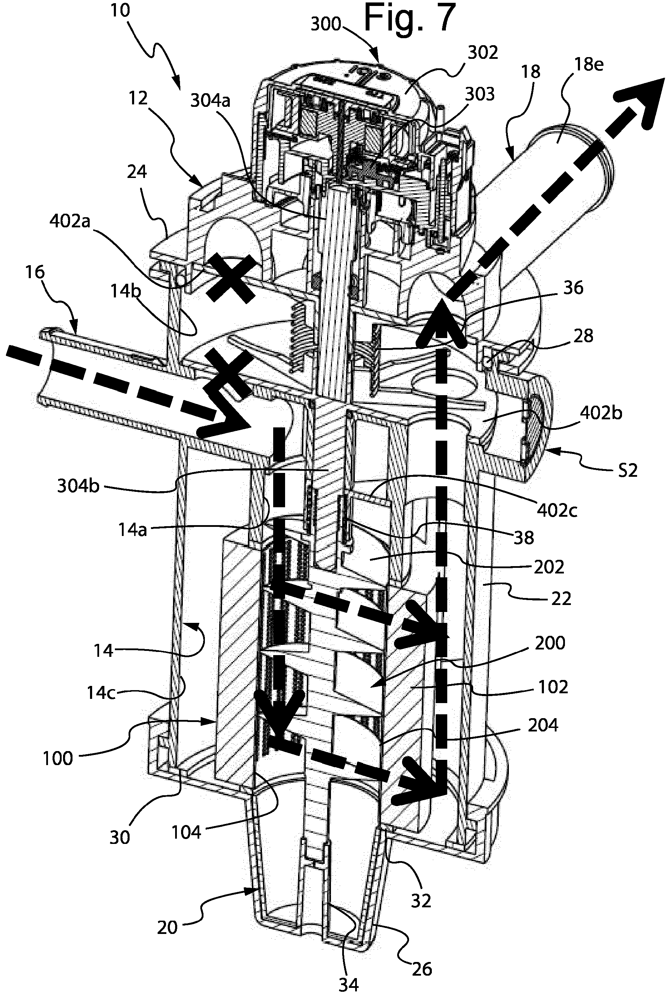

In the embodiment illustrated herein, compacting assembly **200** is configured to remove solid particles from the surface of filtering assembly **100** configured to fluidically communicate with inlet **16,** in particular by conveying them towards the bottom or out of filtering assembly **100.** In other words, as clearly shown in the drawings (e.g. in Figures 7 to 9), and as can be directly and unambiguously deduced therefrom, compacting assembly **200** is operatively mounted in contact with said surface of filtering assembly **100** in order to remove said solid particles from the latter. Thus, compacting assembly **200** is configured to operatively slide against said surface of filtering assembly **100,** thereby removing any solid particles from said surface.

Preferably, compacting assembly **200** extends axially through filtering assembly **100.**

In the illustrated embodiment, compacting assembly **200** comprises an endless screw **202** configured to be rotatably driven by driving assembly **300,** so as to axially push the solid particles trapped by filtering assembly **100.**

In particular, endless screw **202** has a helicoidal profile **204** that, in a *per* se known manner, facilitates the conveyance of the particles out of filtering assembly **100.** In other words, as clearly visible in the drawings (e.g. in Figures 7 to 9), and as can be directly and unambiguously deduced therefrom, helicoidal profile **204** is operatively mounted in contact with the surface of filtering assembly **100** configured to fluidically communicate with inlet **16.** In this way, helicoidal profile **204** - rotatably driven by driving assembly **300** - can effectively remove the solid particles deposited on said surface of the filtering assembly **100.** In fact, helicoidal profile **204** is configured to rotatably slide against said surface of filtering assembly **100,** thereby removing any solid particles therefrom.

The system **10** further comprises a storing container **20** situated in cavity **14** and facing compacting assembly **200.** Storing container **20** is configured to receive the solid particles collected and compacted by compacting assembly **200.** The storing container **20** is removably mounted in cavity **14** and is accessible through casing **12.**

In the embodiment illustrated herein, as aforementioned, the plurality of outlets **18** include a first outlet **18a,** a second outlet **18b,** a third outlet **18d,** a fourth outlet **18e** and, preferably, also a bypass outlet **18bp.** Each one of outlets **18a, 18b, 18d, 18e** and **18bp** is configured for delivering the fluid coming from cavity **14.** Moreover, the system comprises a flow diverter assembly **400** situated in cavity **14** and configured for assuming a plurality of operating conditions defining, through cavity **14,** a respective plurality of fluid paths between inlet **16** and the plurality of outlets **18.** By way of example, each one of such operating conditions is shown in each one of Figures **5** to **9** through cavity 14 and defines a respective fluid path between inlet **16** and one of outlets **18a, 18b, 18d, 18e** and **18bp.**

As will be further described below with reference to the exemplary embodiment illustrated in the drawings, and particularly with reference to Figures **7****,** **8** and **9****,** at least one of said operating conditions provides a fluid path that goes through filtering assembly **100.**

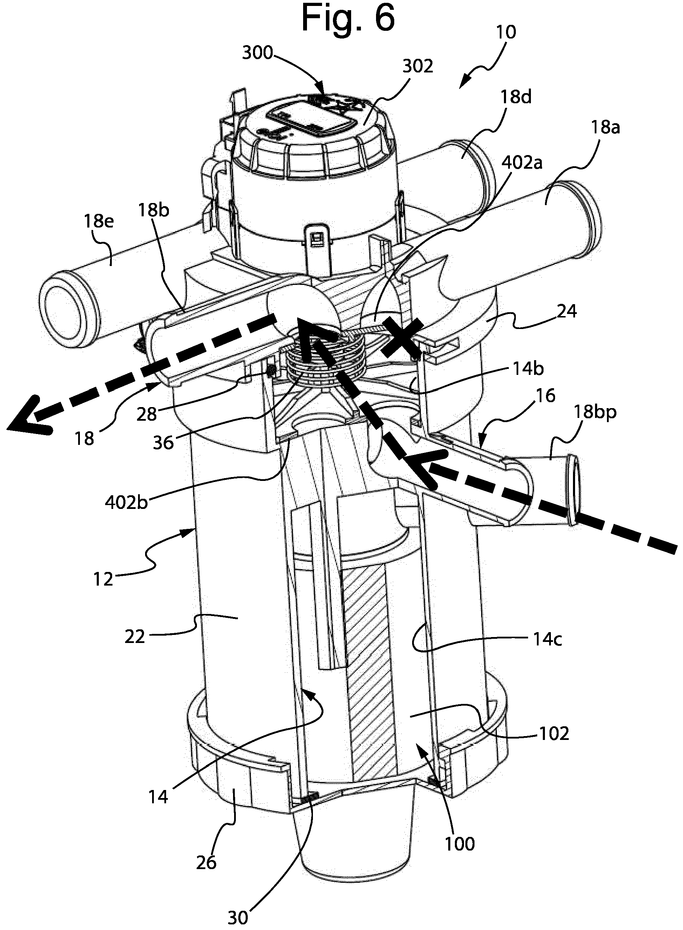

Still with reference to the exemplary embodiment illustrated in the drawings, and particularly with reference to Figures **5** and **6****,** at least another one of the operating conditions provides a further fluid path that does not go through filtering assembly **100.**

Preferably, driving assembly **300** is configured for controlling also the flow diverter assembly **400,** switching it between said operating conditions.

In particular, flow diverter assembly **400** axially faces filtering assembly **100.**

In the illustrated embodiment, flow diverter assembly **400** comprises a plurality of diaphragms **402** having holes (not numbered) and mutually co-operating to define the fluid paths between inlet **16** and outlets **18** through such holes. The plurality of diaphragms **402** can rotate into different relative angular positions defined by driving assembly **300,** in particular by electric motor **302,** possibly co-operating with reduction gear train **303.** In each one of such relative angular positions, the holes of the plurality of diaphragms **402** are either mutually aligned or offset in such a way as to define a respective fluid path between inlet **16** and the plurality of outlets **18.**

In particular, flow diverter **400** comprises a first diaphragm **402a,** a second diaphragm **402b** and a third diaphragm **402c** axially aligned with one another and configured to be rotatably driven, in a coordinated manner, around the same axis of rotation. In some alternative and simpler embodiments of the present invention, the flow diverter assembly may include only a couple of diaphragms or even just one diaphragm configured to be rotatably driven.

Preferably, system **10** further comprises a bypass assembly **500** configured for automatically excluding filtering assembly **100** from the fluid flow from inlet **16** to one of the plurality of outlets **18** in predetermined operating conditions.

Preferably, bypass assembly **500** comprises a non-return valve **502** mounted upstream of filtering assembly **100.**

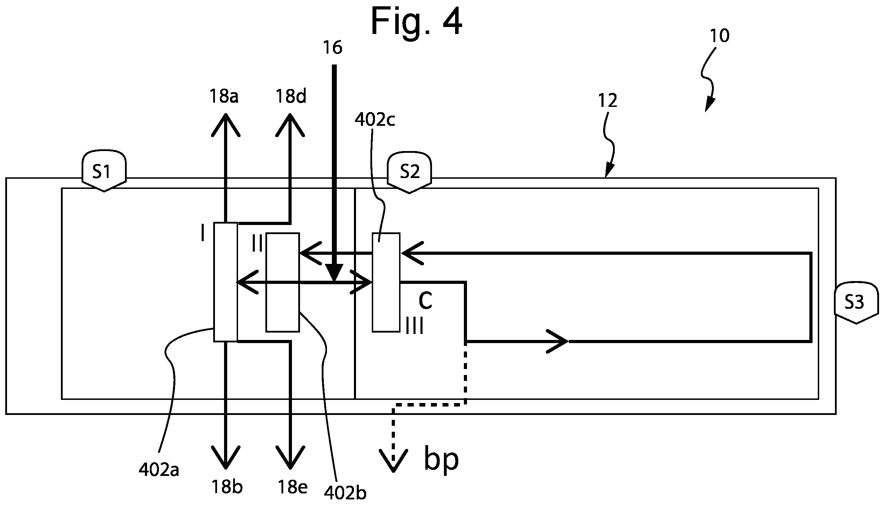

In the embodiment illustrated herein, with particular reference to Figure **4****,** system **10** comprises a position sensor **S1** configured to detect the angular position taken by the plurality of diaphragms **402** and corresponding to a respective operating condition assumed by flow diverter assembly **400.** For example, position sensor **S1** may be an encoder or an electric commutator actuated by cam profiles carried by driving assembly **300** and/or by flow diverter assembly **400.**

Preferably, system **10** comprises a clogging sensor **S2** configured to detect a clogging of filtering assembly **100.** For example, clogging sensor **S2** is a pressure sensor situated upstream and/or downstream of filtering assembly **100.**

Particularly, system **10** comprises a filling sensor **S3** configured to detect when storing container **20** is full. For example, the filling sensor may be a switch (a mechanical or reed switch) or an inductive magnetic sensor (e.g. a magnetoresistor or a Hall-effect sensor) configured to switch when compacting assembly **200** is continuing to push filtered particles towards storing container **20** while the latter is already full; in other words, when storing container **20** is full and can no longer store other material removed from filtering assembly **100** by compacting assembly **200,** a movement is generated which is detected by filling sensor **S3.**

The following will describe some further preferable and optional technical details of the embodiment of the present invention illustrated herein.

Casing **12** comprises a hollow portion **22** and a pair of closure members **24** and **26** sealingly connected on opposite sides of hollow portion **22,** defining therein cavity **14.** In particular, there are an upper closure member **24** and a lower closure member **26.** Moreover, hollow portion **22** has a substantially tubular shape and extends along a longitudinal axis **X-X.**

Fluid tightness of casing **12** is obtained by means of a pair of sealing gaskets **28** and **30** interposed between closure members **24** and **26** and hollow portion **22.** Upper sealing gasket **28** is peripherally adjacent to upper closure member **24** on one side and to the top of hollow portion **22** on the other side. Lower sealing gasket **30** is axially adjacent to lower closure member **26** on one side and to the top of hollow portion **22** on the other side. In particular, sealing gaskets **28, 30** have a substantially annular shape, e.g. they are O-rings.

Inlet **16** is formed laterally on casing **12.** Preferably, inlet **16** is formed laterally, in particular radially, on hollow portion **22.**

The plurality of outlets **18** are formed laterally on casing **12.** Preferably, outlets **18a, 18b, 18d, 18e** are formed laterally on upper closure member **26,** whereas outlet **18bp** is formed laterally, in particular radially, on hollow portion **22.**

Storing container **20** has a substantially cup-like shape and is housed in lower closure member **26.** Furthermore, axial through aperture **104** of hollow body **102** faces towards storing container **20.** Between hollow body **102** and storing container **20** a sealing element **32,** e.g. an O-ring, is axially adjacent.

Lower closure member **26** is removably, in particular repeatably and reversibly, mounted to hollow portion **22.** For example, lower closure member **26** can be coupled to and decoupled from, respectively, hollow portion **22,** so that a user can gain access to the inside of casing **12.** Particularly, a bayonet mechanism or a threaded connection may be provided for removably coupling lower closure member **26** to hollow portion **22.** It is therefore possible to remove storing container **20** from casing **12** in order to empty it of the solid particles accumulated therein and compacted by compacting assembly **200.**

Driving assembly **300** comprises a shaft **304** configured to be rotatably driven by electric motor **302,** in particular via reduction gear train **303,** for controlling compacting assembly **200.** In particular, shaft **304** extends in cavity **14** through upper closure member **24** in order to co-operate with compacting assembly **200.** In the illustrated embodiment, shaft **304** is coupled to endless screw **202** to control the rotation thereof, such two parts being in particular rotatably integral (e.g. keyed) with each other. In more detail, shaft **304** and endless screw **202** are substantially coaxial to each other and to longitudinal axis **X-X.**

In particular, position sensor S1 is configured to detect the angular position taken by shaft **304,** being equipped with electric switching means (not numbered) and a cam profile (not numbered) mounted to the shaft **304** and integrally rotatable therewith to co-operate with such electric switching means.

Moreover, endless screw **202** is housed in axial through cavity **104** of hollow body **102** and is substantially aligned axially with longitudinal axis **X-X.** In more detail, endless screw **202** is rotatably supported in cavity **14** of casing **12** by the coupling of one end thereof with shaft **304** on one side and, on the other side, by the insertion of its opposite end into a support pin **34** protruding from the bottom of lower closure member **26** and going through storing container **20.**

As is clearly visible in the drawings (e.g. in Figures 7 to 9), and as can be directly and unambiguously deduced therefrom, the outer lateral surface of helicoidal profile **204** is operatively situated in contact with the inner lateral surface of filtering assembly **100.** Thus, when driving assembly **300** is activated, the outer lateral surface of helicoidal surface **204** will rotatably slide against the inner lateral surface of filtering assembly **100,** thereby removing the solid particles deposited on filtering assembly **100.**

The plurality of diaphragms **402** are rotatably driven by shaft **304,** in particular around longitudinal axis **X-X.** In the illustrated embodiment, the plurality of diaphragms **402** are carried by shaft **304.** Moreover, shaft **304** comprises a first section **304a** and a second section **304b** axially connected to each other. The first section **304a** has the first diaphragm **402a** keyed onto it, whereas the second diaphragm **402b** is made as one piece with the second section **304b** and the third diaphragm **402c** is keyed onto the second section **304b.**

The first diaphragm **402a** and the second diaphragm **402b** are axially spaced apart by a compression spring **36** mounted around the first section **304a** and the second section **304b.** Likewise, the second diaphragm **402b** and the endless screw **202** are axially spaced apart by another compression spring **38** mounted around the second section **304b.** In this way, springs **36** and **38** contribute to improving the sealing along the fluid path defined by the plurality of diaphragms **402.**

In the embodiment illustrated herein, inlet **16** is equipped with a filter **40,** e.g. configured to prevent any particles that are bigger than microplastic ones (e.g. large filaments, coins or buttons) from crossing it.

The following will describe, with reference to the embodiment illustrated herein by way of example, some examples of the operating conditions that diverter assembly **400** can assume when system **10** is in operation.

In Figure **5****,** diverter assembly **400** is putting inlet **16** in fluidic communication with the first outlet **18a,** excluding filtering assembly **100** from the fluid path.

In particular, inlet **16** is configured to communicate, in a substantially axial direction (i.e. in a direction that is substantially parallel to the longitudinal axis **X-X),** with a central chamber **14a** on one side, and to communicate, in a substantially axial direction, with an upper chamber **14b** on the other side. Central chamber **14a** communicates axially with filtering assembly **100,** while upper chamber **14b** is configured to communicate, in a substantially axial direction, with the plurality of outlets **18.** As clearly shown, chambers **14a** and **14b** are defined by inner walls of casing **12.**

The third diaphragm **402c** is configured to selectively allow or prevent the flow of fluid from inlet **16** to central chamber **14a.** The second diaphragm **402b** is configured to selectively allow or prevent the flow of fluid from inlet **16** to upper chamber **14b.** The first diaphragm **402a** is configured to selectively allow or prevent the flow of fluid from upper chamber **14b** to one or more of outlets **18a, 18b, 18d** and **18e.**

In the operating condition shown in Figure **5****,** therefore, the third diaphragm **402c** prevents the fluid from flowing from inlet **16** to central chamber **14a,** thus excluding filtering assembly **100** from the fluid path. Conversely, the second diaphragm **402b** allows the fluid to flow from inlet **16** to upper chamber **14b.** Lastly, the first diaphragm 402a selectively allows the fluid to flow from upper chamber **14b** to the first outlet **18a** only.

In Figure **6****,** diverter assembly **400** is putting inlet **16** in fluidic communication with the second outlet **18b,** excluding filtering assembly **100** from the fluid path.

In the operating condition shown in Figure **6****,** therefore, the third diaphragm **402c** prevents the fluid from flowing from inlet **16** to central chamber **14a,** thus excluding filtering assembly **100** from the fluid path. Conversely, the second diaphragm **402b** allows the fluid to flow from inlet **16** to upper chamber **14b.** Lastly, the first diaphragm 402a selectively allows the fluid to flow from upper chamber **14b** to the second outlet **18b** only.

In Figure **7****,** diverter assembly **400** is putting inlet **16** in fluidic communication with the fourth outlet **18e,** including filtering assembly **100** in the fluid path.

In particular, central chamber **14a** is configured to communicate, in a substantially radial direction (i.e. a direction substantially perpendicular to the longitudinal axis **X-X),** with an annular chamber **14c** through filtering assembly **100.** Furthermore, annular chamber **14c** is configured to communicate, in a substantially axial direction, with upper chamber **14b.** As clearly shown, annular chamber **14c** is defined by inner walls of casing **12.**

The second diaphragm **402b** is also configured to selectively allow or prevent the flow of fluid from annular chamber **14c** to upper chamber **14b.**

In the operating condition shown in Figure **7****,** therefore, the third diaphragm **402c** allows the fluid to flow from inlet **16** to central chamber **14a,** so that the fluid will flow radially outwards through filtering assembly **100** and reach annular chamber **14c.** Moreover, the second diaphragm **402b** prevents the fluid from flowing from the inlet **16** to upper chamber **14b,** while however allowing the fluid to flow from annular chamber **14c** to upper chamber **14b.** Lastly, the first diaphragm **14a** selectively allows the fluid to flow from upper chamber **14b** to the fourth outlet **18e** only.

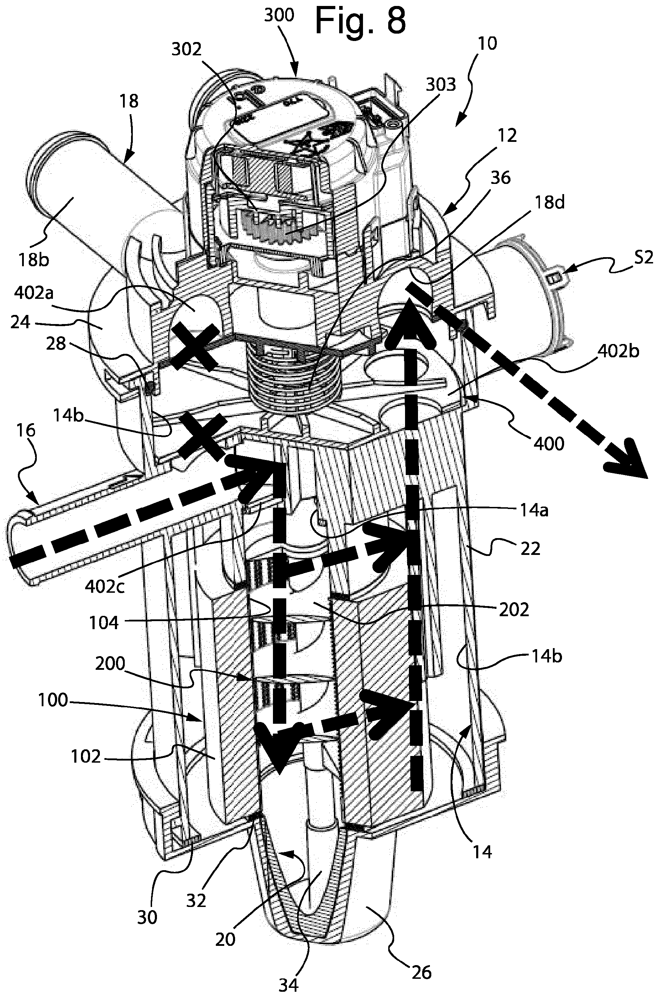

In Figure **8****,** diverter assembly **400** is putting inlet **16** in fluidic communication with the third outlet **18d,** including filtering assembly **100** in the fluid path.

In the operating condition shown in Figure **8****,** therefore, the third diaphragm **402c** allows the fluid to flow from inlet **16** to central chamber **14a,** so that the fluid will flow radially outwards through filtering assembly **100** and reach annular chamber **14c.** Moreover, the second diaphragm **402b** prevents the fluid from flowing from inlet **16** to upper chamber **14b,** while however allowing the fluid to flow from annular chamber **14c** to upper chamber **14b.** Lastly, the first diaphragm 402a selectively allows the fluid to flow from upper chamber **14b** to the third outlet **18d** only.

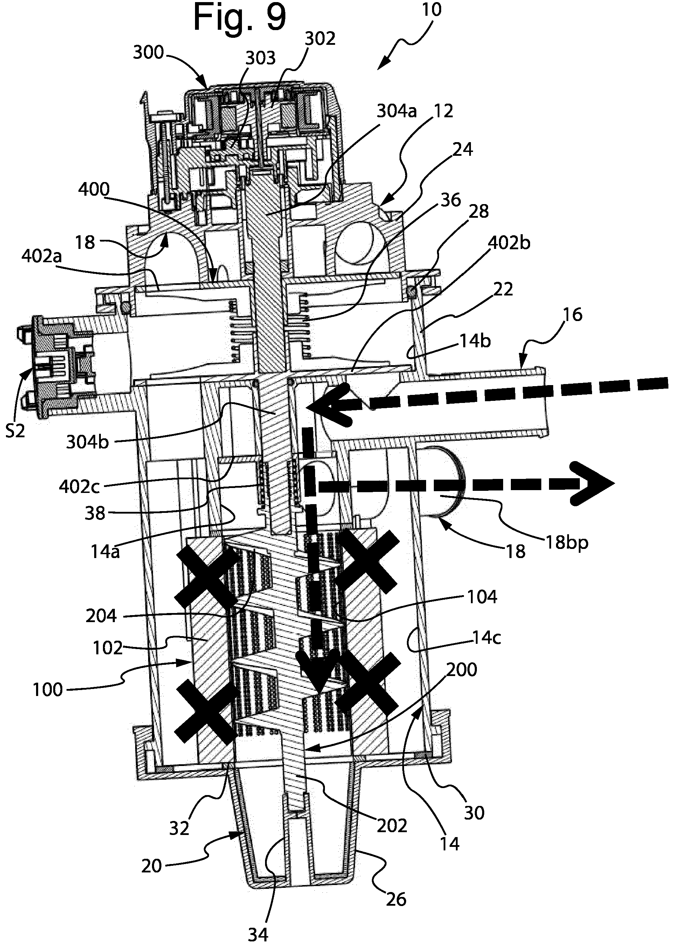

In Figure **9****,** diverter assembly **400** is putting inlet **16** in fluidic communication with bypass outlet **18bp,** including filtering assembly **100** in the fluid path.

In particular, central chamber **14a** is configured to communicate in a substantially radial direction with bypass outlet **18bp.**

Furthermore, non-return valve **502** is connected between central chamber **14a** and bypass outlet **18bp** to allow the fluid to flow between them when the pressure in central chamber **14a** exceeds a predetermined threshold value, which particularly corresponds to a clogged condition of filtering assembly **100.**

In the operating condition shown in Figure **9****,** therefore, the third diaphragm **402c** allows the fluid to flow from inlet **16** to central chamber **14a.** If filtering assembly **100** is clogged, however, the fluid will not be able to reach annular chamber **14c.** This will translate into an abnormal increase of the pressure in central chamber **14a,** such as to cause non-return valve **502** to open, resulting in the fluid exiting through bypass outlet **18bp.**

Of course, without prejudice to the principle of the invention, the forms of embodiment and the implementation details may be extensively varied from those described and illustrated herein by way of non-limiting example, without however departing from the scope of the invention as set out in the appended claims.

System **10** can be installed on a duct leading into the wash tub of laundry washing machine **WM,** or on the drawer of the latter. Thus, the water dripping from system **10** when filtering assembly **100** is replaced or the compacted residue is removed (e.g. from storing container **20)** will return into the tub without dripping onto the floor outside laundry washing machine **WM.** Furthermore, system **10** can be installed with a suitable angle to allow the water stagnating in system **10** to flow towards one of outlets **18** (preferably one of those leading into the wash tub), thereby limiting as much as possible any dripping when replacing filtering assembly **100** or removing the compacted residue (e.g. from storing container **20**).

## Claims

1. Filtering system **(10),** in particular for a washing or drying machine, such as a laundry washing machine or a clothes dryer; said system comprising:
- a casing **(12)** internally defining a cavity **(14)** and comprising an inlet **(16)** configured to receive a fluid and leading into the cavity **(14),** and at least one outlet **(18)** configured to deliver the fluid coming from the cavity **(14);**
- a filtering assembly **(100)** contained in the cavity **(14)** and configured to be crossed by the fluid entering said casing **(12)** through the inlet **(16),** so as to trap any solid particles, in particular microplastic ones, contained in said fluid;
- a compacting assembly **(200)** situated in said cavity **(14)** and configured for collecting and compacting the solid particles trapped by the filtering assembly **(100);** and
- a driving assembly **(300)** configured to drive the compacting assembly **(200);** and
- a storing container **(20)** situated in the cavity **(14),** facing the compacting assembly **(200),** and configured to receive the solid particles collected and compacted by said compacting assembly **(200);**
said system being **characterized in that** the filtering assembly **(100)** comprises a hollow body **(102)** having an axial through aperture **(104)** crossed by said compacting assembly **(200)** and facing towards the storing container **(20);**
**in that** the storing container **(20)** is removably mounted in the cavity **(14)** and is accessible through the casing **(12);**
**in that** said storing container **(20)** has a substantially cup-like shape and is housed in a lower closure member **(26)** removably mounted to a hollow portion **(22)** of said casing (12); and
**in that** between said hollow body **(102)** and said storing container **(20)** a sealing element **(32)** is axially adjacent.

2. System according to claim **1,** wherein the compacting assembly **(200)** is configured to remove the solid particles from the surface of the filtering assembly **(100)** configured to fluidically communicate with said inlet **(16),** in particular by conveying them towards the bottom or out of said filtering assembly **(100).**

3. System according to claim **1** or **2,** wherein said compacting assembly **(200)** extends axially through the filtering assembly **(100).**

4. System according to any one of the preceding claims, wherein said compacting assembly **(200)** comprises an endless screw **(202)** configured to be rotatably driven by the driving assembly **(300),** so as to axially push the solid particles trapped by the filtering assembly **(100).**

5. System according to any of the preceding claims, wherein said hollow body **(102)** has a substantially cylindrical shape internally defining said axial through aperture **(104).**

6. System according to claim **4,** wherein endless screw **(202)** is rotatably supported in the cavity **(14)** of said casing **(12)** by the coupling of one end thereof with a shaft **(304)** of the driving assembly **(300)** and on the other side, by the insertion of its opposite end into a support pin **(34)** protruding from the bottom of said lower closure member **(26)** and going through said storing container **(20).**

7. System according to any one of the preceding claims, wherein said casing **(12)** comprises a plurality of outlets **(18)** configured for delivering the fluid coming from the cavity **(14);** said system further comprising a flow diverter assembly **(400)** situated in the cavity **(14)** and configured for assuming a plurality of operating conditions defining, through the cavity **(14),** a respective plurality of fluid paths between the inlet **(16)** and the outlets **(18).**

8. System according to claim **7,** wherein at least one of said operating conditions provides a fluid path that goes through said filtering assembly **(100).**

9. System according to claim 7 or 8, wherein at least one of said operating conditions provides an additional fluid path that does not go through said filtering assembly **(100).**

10. System according to any one of claims 7 to 9, wherein said driving assembly **(300)** is configured for controlling also said flow diverter assembly **(400),** switching it between said operating conditions.

11. System according to any one of claims **7** to **10,** wherein said flow diverter assembly **(400)** axially faces the filtering assembly **(100).**

12. System according to any one of claims **7** to **11,** wherein said flow diverter assembly **(400)** comprises at least one diaphragm **(402)** having at least one hole and configured to be rotatably driven.

13. System according to claim **12,** wherein said flow diverter assembly **(400)** comprises a plurality of perforated diaphragms **(402)** axially aligned with one another and configured to be rotatably driven in a coordinated manner around the same axis of rotation.

14. System according to any one of the preceding claims, further comprising a bypass assembly **(500)** configured for automatically excluding the filtering assembly **(100)** from the fluid flow from the inlet **(16)** to said at least one outlet **(18)** in predetermined operating conditions.

15. System according to claim **14,** wherein said bypass assembly **(500)** comprises a non-return valve **(502)** mounted upstream of the filtering assembly **(100).**

16. System according to any one of the preceding claims, further comprising a clogging sensor **(S2)** configured to detect a clogging of the filtering assembly **(100).**

17. System according to claim **16,** wherein said clogging sensor **(S2)** comprises a pressure sensor situated upstream and/or downstream of the filtering assembly **(100).**

18. System according to any of the preceding claims, further comprising a filling sensor **(S3)** configured to detect when the storing container **(20)** is full.

## Patentansprüche

1. Filtersystem (10), insbesondere für eine Wasch- oder Trocknungsmaschine, wie beispielsweise eine Wäschewaschmaschine oder einen Wäschetrockner; wobei das System umfasst:
- ein Gehäuse (12), das im Inneren einen Hohlraum (14) begrenzt und einen Einlass (16), der zur Aufnahme eines Fluids ausgelegt ist und in den Hohlraum (14) mündet, sowie mindestens einen Auslass (18) umfasst, der zur Abgabe des aus dem Hohlraum (14) kommenden Fluids ausgelegt ist;
- eine Filterbaugruppe (100), die in dem Hohlraum (14) angeordnet ist und so ausgebildet ist, dass das durch den Einlass (16) in das Gehäuse (12) eintretende Fluid sie durchströmt, um darin enthaltene Feststoffpartikel, insbesondere Mikroplastikpartikel, zurückzuhalten;
- eine Verdichtungsbaugruppe (200), die sich in dem Hohlraum (14) befindet und dazu ausgelegt ist, die von der Filterbaugruppe (100) zurückgehaltenen Feststoffpartikel zu sammeln und zu verdichten; und
- eine Antriebsbaugruppe (300), die so ausgelegt ist, dass sie die Verdichtungsbaugruppe (200) antreibt; und
- einen in dem Hohlraum (14) angeordneten, der Verdichtungsbaugruppe (200) zugewandten Aufbewahrungsbehälter (20), der dazu ausgelegt ist, die von der Verdichtungsbaugruppe (200) gesammelten und verdichteten Feststoffpartikel aufzunehmen;
wobei das System **dadurch gekennzeichnet ist, dass** die Filterbaugruppe (100) einen Hohlkörper (102) umfasst, der eine axiale Durchgangsöffnung (104) aufweist, die von der Verdichtungsbaugruppe (200) durchquert wird und mit ihren Flächen dem Aufbewahrungsbehälter (20) zugewandt ist;
dass der Aufbewahrungsbehälter (20) abnehmbar in dem Hohlraum (14) angebracht und durch das Gehäuse (12) zugänglich ist;
dass der Aufbewahrungsbehälter (20) eine im Wesentlichen becherartige Form aufweist und in einem unteren Verschlusselement (26) untergebracht ist, das abnehmbar an einem hohlen Abschnitt (22) des Gehäuses (20) angebracht ist; und
dass zwischen dem Hohlkörper (102) und dem Vorratsbehälter (20) ein Dichtungselement (32) axial angeordnet ist.

2. System nach Anspruch 1, wobei die Verdichtungsbaugruppe (200) so ausgelegt ist, dass sie die festen Partikel von der Oberfläche der Filterbaugruppe (100) entfernt, die so ausgelegt ist, dass sie in Fluidverbindung mit dem Einlass (16) steht, insbesondere indem sie diese zum Boden hin oder aus der Filterbaugruppe (100) heraus befördert.

3. System nach Anspruch 1 oder 2, wobei sich die Verdichtungsbaugruppe (200) axial durch die Filterbaugruppe (100) erstreckt.

4. System nach einem der vorstehenden Ansprüche, wobei die Verdichtungsbaugruppe (200) eine Endlosschnecke (202) umfasst, die so ausgebildet ist, dass sie von der Antriebsbaugruppe (300) drehbar angetrieben wird, um die von der Filterbaugruppe (100) aufgefangenen Feststoffpartikel axial zu verschieben.

5. System nach einem der vorstehenden Ansprüche, wobei der Hohlkörper (102) eine im Wesentlichen zylindrische Form aufweist, die im Inneren die axiale Durchgangsöffnung (104) definiert.

6. System nach Anspruch 4, wobei die Endlosschnecke (202) im Hohlraum (14) des Gehäuses (12) drehbar gelagert ist, indem ihr eines ihrer Enden mit einer Welle (304) der Antriebsbaugruppe (300) und auf der anderen Seite durch das Einführen ihres gegenüberliegenden Endes in einen Stützstift (34) drehbar gelagert ist, der aus dem Boden des unteren Verschlusselements (26) herausragt und den Vorratsbehälter (20) durchdringt.

7. System nach einem der vorstehenden Ansprüche, wobei das Gehäuse (12) eine Vielzahl von Auslässen (18) aufweist, die zur Abgabe des aus dem Hohlraum (14) kommenden Fluids ausgebildet sind; wobei das System ferner eine Strömungsumlenkbaugruppe (400) umfasst, die sich im Hohlraum (14) befindet und so ausgebildet ist, dass sie eine Vielzahl von Betriebszuständen einnehmen kann, die, durch den Hohlraum (14), jeweils mehrere Fluidwege zwischen dem Einlass (16) und den Auslässen (18) festlegen.

8. System nach Anspruch 7, wobei mindestens einer der Betriebszustände einen Fluidweg bereitstellt, der durch die Filterbaugruppe (100) verläuft.

9. System nach Anspruch 7 oder 8, wobei mindestens einer der Betriebszustände einen zusätzlichen Fluidweg bereitstellt, der nicht durch die Filterbaugruppe (100) verläuft.

10. System nach einem der Ansprüche 7 bis 9, wobei die Antriebsbaugruppe (300) so konfiguriert ist, dass sie auch die Strömungsumleitungsbaugruppe (400) steuert und diese zwischen den Betriebszuständen umschaltet.

11. System nach einem der Ansprüche 7 bis 10, wobei die Strömungsumleitungsbaugruppe (400) der Filterbaugruppe (100) axial gegenüberliegt.

12. System nach einem der Ansprüche 7 bis 11, wobei die Strömungsumleitungsbaugruppe (400) mindestens eine Membran (402) mit mindestens einem Loch umfasst, die so ausgelegt ist, dass sie drehbar angetrieben werden kann.

13. System nach Anspruch 12, wobei die Strömungsumleitungsbaugruppe (400) mehrere perforierte Membranen (402) umfasst, die axial zueinander ausgerichtet und so ausgebildet sind, dass sie in einer koordinierten Weise um dieselbe Drehachse drehbar angetrieben werden können.

14. System nach einem der vorstehenden Ansprüche, das ferner eine Bypass-Baugruppe (500) umfasst, die so ausgelegt ist, dass sie Filterbaugruppe (100) unter vorbestimmten Betriebsbedingungen automatisch aus dem Fluidstrom vom Einlass (16) zu dem mindestens einen Auslass (18) ausschaltet.

15. System nach Anspruch 14, wobei die Bypass-Baugruppe (500) ein Rückschlagventil (502) umfasst, das stromaufwärts der Filterbaugruppe (100) angeordnet ist.

16. System nach einem der vorstehenden Ansprüche, das ferner einen Verstopfungssensor (S2) umfasst, der so ausgelegt ist, dass er eine Verstopfung der Filtereinheit (100) erfasst.

17. System nach Anspruch 16, wobei der Verstopfungssensor (S2) einen Drucksensor umfasst, der stromaufwärts und/oder stromabwärts der Filterbaugruppe (100) angeordnet ist.

18. System nach einem der vorstehenden Ansprüche, das ferner einen Füllstandsensor (S3) umfasst, der so ausgelegt ist, dass er erkennt, wenn der Vorratsbehälter (20) voll ist.

## Revendications

1. Système de filtration (10), en particulier pour une machine de lavage ou de séchage, telle qu'une machine à laver le linge ou un sèche-linge ; ledit système comprenant :
- un carter (12) définissant intérieurement une cavité (14) et comprenant une entrée (16) configurée pour recevoir un fluide et débouchant dans la cavité (14), et au moins une sortie (18) configurée pour délivrer le fluide provenant de la cavité (14) ;
- un ensemble de filtration (100) contenu dans la cavité (14) et configuré pour être traversé par le fluide entrant dans ledit carter (12) par l'entrée (16), de manière à piéger d'éventuelles particules solides, en particulier microplastiques, contenues dans ledit fluide ;
- un ensemble de compactage (200) situé dans ladite cavité (14) et configuré pour collecter et compacter les particules solides piégées par l'ensemble de filtration (100) ; et
- un ensemble d'entraînement (300) configuré pour entraîner l'ensemble de compactage (200) ; et
- un récipient de stockage (20) situé dans la cavité (14), faisant face à l'ensemble de compactage (200), et configuré pour recevoir les particules solides collectées et compactées par ledit ensemble de compactage (200) ;
ledit système étant **caractérisé en ce que** l'ensemble de filtration (100) comprend un corps creux (102) présentant une ouverture axiale traversante (104) traversée par ledit ensemble de compactage (200) et faisant face au récipient de stockage (20) ;
**en ce que** le récipient de stockage (20) est monté de manière amovible dans la cavité (14) et est accessible à travers le carter (12) ;
**en ce que** ledit récipient de stockage (20) présente une forme sensiblement en godet et est logé dans un élément de fermeture inférieur (26) monté de manière amovible sur une partie creuse (22) dudit carter (12) ; et
**en ce qu'**entre ledit corps creux (102) et ledit récipient de stockage (20), un élément d'étanchéité (32) est adjacent axialement.

2. Système selon la revendication 1, dans lequel l'ensemble de compactage (200) est configuré pour retirer les particules solides de la surface de l'ensemble de filtration (100) configurée pour être en communication fluidique avec ladite entrée (16), en particulier en les convoyant vers le fond ou hors dudit ensemble de filtration (100).

3. Système selon la revendication 1 ou 2, dans lequel ledit ensemble de compactage (200) s'étend axialement à travers l'ensemble de filtration (100).

4. Système selon l'une quelconque des revendications précédentes, dans lequel ledit ensemble de compactage (200) comprend une vis sans fin (202) configurée pour être entraînée en rotation par l'ensemble d'entraînement (300), de manière à pousser axialement les particules solides piégées par l'ensemble de filtration (100).

5. Système selon l'une quelconque des revendications précédentes, dans lequel ledit corps creux (102) présente une forme sensiblement cylindrique définissant intérieurement ladite ouverture axiale traversante (104).

6. Système selon la revendication 4, dans lequel la vis sans fin (202) est supportée en rotation dans la cavité (14) dudit carter (12), d'une part par le couplage de l'une de ses extrémités avec un arbre (304) de l'ensemble d'entraînement (300) et, d'autre part, par l'insertion de son extrémité opposée dans une broche de support (34) faisant saillie à partir du fond dudit élément de fermeture inférieur (26) et passant à travers ledit récipient de stockage (20).

7. Système selon l'une quelconque des revendications précédentes, dans lequel ledit carter (12) comprend une pluralité de sorties (18) configurées pour délivrer le fluide provenant de la cavité (14) ; ledit système comprenant en outre un ensemble de déviation d'écoulement (400) situé dans la cavité (14) et configuré pour adopter une pluralité de conditions de fonctionnement définissant, à travers la cavité (14), une pluralité respective de trajets de fluide entre l'entrée (16) et les sorties (18).

8. Système selon la revendication 7, dans lequel au moins l'une desdites conditions de fonctionnement définit un trajet de fluide qui passe à travers ledit ensemble de filtration (100).

9. Système selon la revendication 7 ou 8, dans lequel au moins l'une desdites conditions de fonctionnement définit un trajet de fluide supplémentaire qui ne passe pas à travers ledit ensemble de filtration (100).

10. Système selon l'une quelconque des revendications 7 à 9, dans lequel ledit ensemble d'entraînement (300) est configuré pour commander également ledit ensemble de déviation d'écoulement (400), en le commutant entre lesdites conditions de fonctionnement.

11. Système selon l'une quelconque des revendications 7 à 10, dans lequel ledit ensemble de déviation d'écoulement (400) fait face axialement à l'ensemble de filtration (100).

12. Système selon l'une quelconque des revendications 7 à 11, dans lequel ledit ensemble de déviation d'écoulement (400) comprend au moins un diaphragme (402) présentant au moins un trou et configuré pour être entraîné en rotation.

13. Système selon la revendication 12, dans lequel ledit ensemble de déviation d'écoulement (400) comprend une pluralité de diaphragmes perforés (402) alignés axialement les uns par rapport aux autres et configurés pour être entraînés en rotation de manière coordonnée autour du même axe de rotation.

14. Système selon l'une quelconque des revendications précédentes, comprenant en outre un ensemble de dérivation (500) configuré pour exclure automatiquement l'ensemble de filtration (100) de l'écoulement de fluide depuis l'entrée (16) vers ladite au moins une sortie (18) dans des conditions de fonctionnement prédéterminées.

15. Système selon la revendication 14, dans lequel ledit ensemble de dérivation (500) comprend un clapet anti-retour (502) monté en amont de l'ensemble de filtration (100).

16. Système selon l'une quelconque des revendications précédentes, comprenant en outre un capteur de bouchage (S2) configuré pour détecter un bouchage de l'ensemble de filtration (100).

17. Système selon la revendication 16, dans lequel ledit capteur de bouchage (S2) comprend un capteur de pression situé en amont et/ou en aval de l'ensemble de filtration (100).

18. Système selon l'une quelconque des revendications précédentes, comprenant en outre un capteur de remplissage (S3) configuré pour détecter lorsque le récipient de stockage (20) est plein.
